# DEMANDE DE BREVET EUROPEEN

(11) **EP 3 006 264 A1**
(43) Date de publication de la demande: **13.04.2016**
(21) Numéro de dépôt: 14447009.3
(22) Date de dépôt: 10.10.2014
(51) Int. Cl.: B60P 3/39

(54) **Mécanisme d'entraînement et de guidage pour lit escamotable sous le plafond dans un véhicule de camping**

(71) Demandeur: Goethals, Roland, 4520 Wanze (BE)
(72) Inventeur: Goethals, Roland, 4520 Wanze (BE)

(57) **Abrégé**

Mécanisme d'entraînement et de guidage pour lit escamotable dans un véhicule de camping (2) composé d'un arbre d'entraînement (10) muni de poulies double (12) autour desquelles deux sangles (8) et deux sangles (9) s'enroulent et sont reliées aux quatre coins d'un lit (1) qui est entraîné vers le haut ou vers le bas à l'aide d'un moteur avec réducteur (11) en passant par des poulies de passage (13) et guidé par deux guides fixes (6) situés perpendiculairement au plancher (3) et en suivant l'inclinaison du flanc (5) et avec l'assistance de deux bâtis de guides mobiles (7) munis soit de rouleaux (15,16 et 18) ou soit de frotteurs (17,19 et 24) ou soit de tubes de guidage alésés (27).

## Description

### Domaine de l'invention

La présente invention concerne un véhicule de camping incorporant un ou plusieurs lits escamotable(s) sous le plafond. Cette technique est divulguée par le document EP 2450233 B1 du même inventeur que l'inventeur de la présente invention.La présente invention concerne une amélioration et une simplification du système d'entraînement et du système de guidage d'un ou plusieurs lits. les avantages de la présente invention sont multiples et notamment l'usage de moins de pièces,un montage plus aisé, un fonctionnement amélioré, un moindre coût de fabrication et un moindre risque d'intervention après le montage.Les avantages liés a l'utilisation de lit(s) escamotable(s) sous le plafond avec guidage suivant l'inclinaison du flanc du véhicule sont amplement décrits dans le document EP 2450233 B1.Se reporter à ce document.

### Résumé de l'invention

La présente invention concerne l'utilisation d'un arbre d'entraînement commun aux extrémités duquel sont fixées des poulies deux par deux et autour desquelles quatre sangles s'enroulent et sont reliées aux quatre coins du lit et en même temps et à une extrémité de l'arbre d'entraînement se trouve un guide fixe autour duquel vient rouler ou glisser un guide mobile et qu'un deuxième guide fixe avec un guide roulant ou glissant se trouve à l'autre extrémité de l'arbre d'entraînement et que dans le prolongement de cet arbre d'entraînement et à une seule de ses extrémités est relié solidairement un moteur avec son réducteur de vitesse.

### Brève description des dessins

Les dessins se situent par rapport à une ligne fictive parallèle au plancher et parallèle aux flancs du véhicule, au centre du véhicule.
La figure 1 représente en perspective une vue d'ensemble d'un lit en position entre le haut et le bas.
La figure 2 représente en coupe transversale et verticale un guide mobile roulant avec levier de poussée.
La figure 3 représente en coupe horizontale un guide mobile roulant avec levier de poussée.
La figure 4 représente en coupe transversale et verticale un guide mobile avec coulisse de poussée.
La figure 5 représente en coupe horizontale un guide mobile avec coulisse de poussée.
La figure 6 représente en coupe transversale et verticale un guide mobile roulant sans levier de poussée.
La figure 7 représente en coupe transversale et verticale un guide mobile avec frotteurs.
La figure 8 représente en coupe horizontale un guide avec frotteur et frotteurs de maintien longitudinal.
La figure 9 représente en coupe horizontale un guide avec rouleau à gorge pour le maintien longitudinal.
La figure 10 représente en coupe transversale et verticale un guide avec tube de guidage alésé.
La figure 11 représente sommairement une vue transversale d'un axe d'entraînement situé en haut du flanc du véhicule.
La figure 12 représente sommairement une vue transversale d'un axe d'entraînement situé en bas du flanc du véhicule.
La figure 13 représente sommairement une vue transversale d'un axe d'entraînement situé sous le plafond du véhicule.
La figure 14 représente sommairement une vue transversale d'un axe d'entraînement situé à l'extérieur et sur le toit du véhicule.
La figure 15 représente sommairement une vue transversale d'un axe d'entraînement situé sous le lit et solidaire du lit.
La figure 16 représente sommairement une vue transversale d'un lit articulé.
La figure 17 représente sommairement une vue transversale d'un lit en position inclinée sous le plafond.

### Description de l'invention

L'invention est exposée ci-après à l'aide des dessins pour plusieurs modes d'exécution. Les explications concernant les lits superposés longitudinaux ou transversaux, les lits superposés articulés transversaux, les supports de lits, les béquilles repliables et les mécanismes de positionnements s'y rapportant sont identiques que ceux décrits dans le document EP 2450233 B1 et ne sont donc pas décrits dans le présent document.

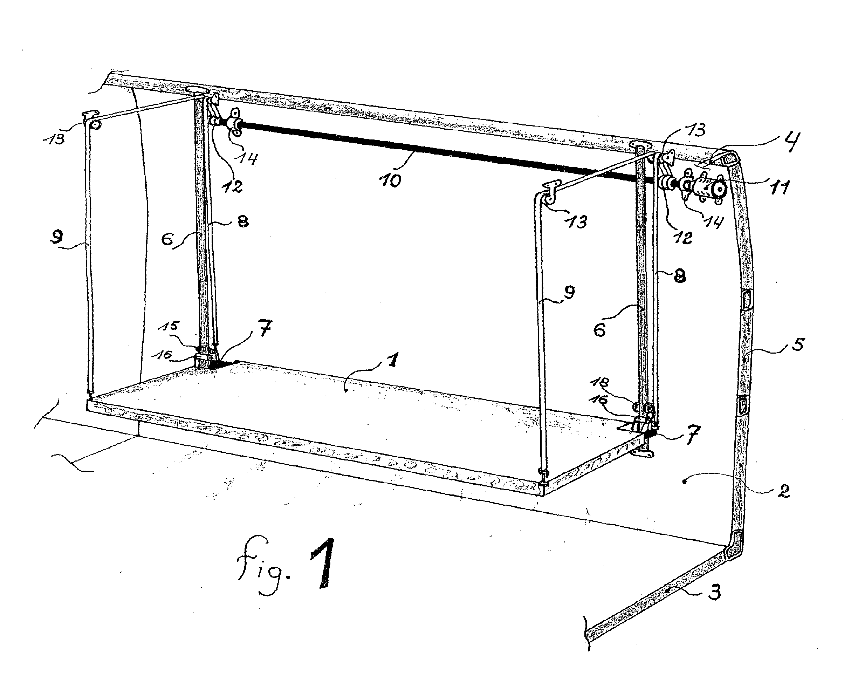

La figure 1 représente un lit 1 en position intermédiaire entre le haut et le bas dans un véhicule de camping 2 , le lit 1 est parallèle au plancher 3 et le lit 1 est muni à chacune de ses extrémités proches du flanc 5 d'un bâti de guide mobile 7.En vis à vis de ces deux bâtis de guides mobiles 7 deux guides fixes 6 sous forme de tubes métalliques reliés d'une part au flanc 5 en haut sous le plafond 4 et d'autre part au flanc 5 en bas à hauteur d'utilisation de nuit et ces guides fixes 6 sont positionnés verticalement par rapport au plancher 3 dans le sens longitudinal et sont positionnés inclinés en suivant l'inclinaison du flanc 5 dans le sens transversal. Un arbre d'entraînement 10 dont la longueur est au moins égale ou légèrement supérieure à la longueur du lit 1 est muni de deux paliers 14 situés de part et d'autre de l'arbre d'entraînement 10 et ces paliers 14 sont fixés solidairement au flanc 5 et sensiblement en haut du flanc 5.A l'une des extrémités de l'arbre d'entraînement 10 et dans son prolongement est relié solidairement l'axe de sortie d'un moteur avec réducteur 11 et ce moteur avec réducteur 11 est fixé au flanc 5. L'arbre d'entraînement 10 est parallèle au plancher 3 et parallèle au flanc 5. L'arbre d'entraînement 10 comporte deux poulies d'entraînement jumelées 12 et solidaires de l'arbre d'entraînement 10 et situées à l'une des extrémités de l'arbre d'entraînement 10 au delà ou en deçà du guide fixe 6 correspondant et deux autres poulies d'entraînement jumelées 12 solidaires de l'arbre d'entraînement 10 et situées identiquement à l'autre extrémité de l'arbre d'entraînement 10.A une extrémité de l'arbre d'entraînement 10 une sangle 8 fixée à une des poulies d'entraînement jumelées 12 s'enroule autour de cette poulie d'entraînement jumelée 12 pour ensuite se diriger et passer autour d'une poulie de passage13 fixée au plafond 4 et proche du flanc 5 et ensuite la sangle 8 se dirige vers le bas pour venir se fixer au coin du lit1 proche du flanc 5 et d'un des deux guides fixes 6. Une autre sangle 9 fixée à la poulie d'entraînement jumelée 12 et côte à côte avec la sangle 8 se dirige vers le haut pour passer sur une poulie de passage 13 située sous le plafond 4 et proche du flanc 5 et se diriger ensuite sous le plafond vers une autre poulie de passage 13 fixée au plafond et située sensiblement vers le centre du plafond et à une distance de la première poulie de passage 13 égale à la largeur du lit 1 et ensuite cette sangle 9,après être passée sur la poulie de passage 13 se dirige vers le bas pour venir se fixer au coin du lit 1 proche du centre du véhicule. Une troisième sangle 8 et une quatrième sangle 9 sont identiquement utilisées mais situées à l'autre extrémité de l'arbre d'entraînement 10 et de cette façon le lit est relié par quatre sangles ,deux sangles 8 et deux sangles 9, à ses quatre coins. Lorsque le moteur avec réducteur 11 fonctionne et selon le sens de rotation l'arbre d'entraînement 10 enroule ou déroule les deux sangles 8 et les deux sangles 9 et le lit 1 est entraîné vers le haut ou vers le bas.

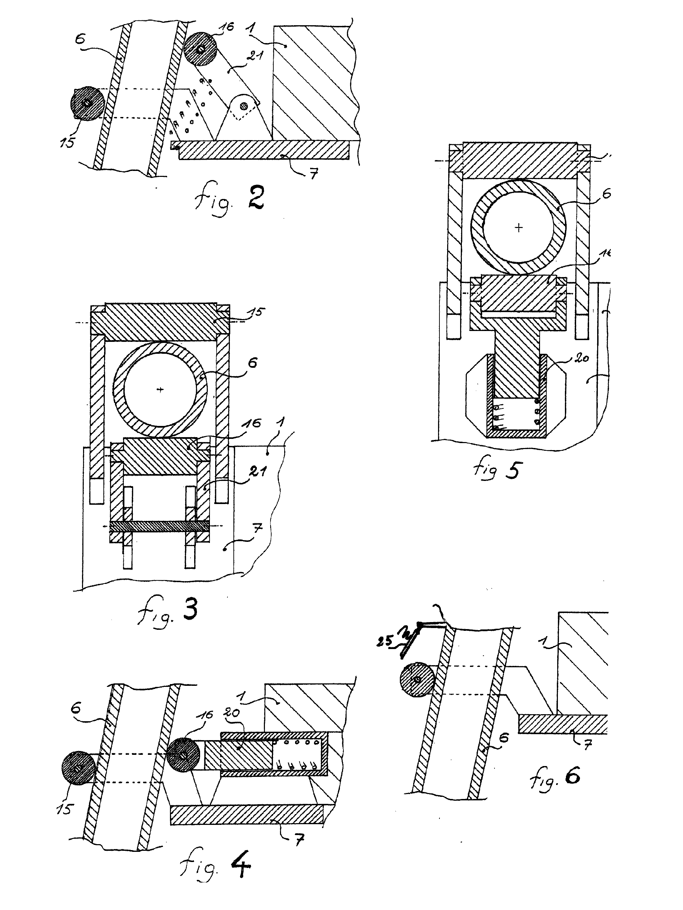

Selon les figures 2 et 3 un bâti de guide mobile 7 est fixé à un coin du lit 1 et proche du guide fixe 6 et un deuxième bâti de guide mobile 7 est fixé à l'autre coin du lit 1 et proche du deuxième guide fixe 6.Un rouleau principal cylindrique15 dont l'axe est parallèle à l'arbre d'entraînement 10 est monté sur un des deux bâtis de guide mobile 7 et de manière à assurer un contact avec le guide fixe 6 entre le flanc 5 et le guide fixe 6 Le rouleau principal cylindrique 15 maintien le lit1 dans le sens transversal. Un levier articulé 21 est monté sur le bâti de guide mobile 7 avec un axe parallèle à l'arbre d'entraînement 10 et à l'extrémité de ce levier articulé 21 est monté un rouleau 16 dont l'axe est parallèle à l'arbre d'entraînement 10, le rouleau 16 est en contact avec le guide fixe 6 et un ressort relie le levier articulé 21 au bâti de guide mobile 7 de manière à assurer un contact permanent du rouleau cylindrique 15 et du rouleau 16 avec le guide fixe 6 et ceci même en cas de variation d'angle entre le lit 1 et le guide fixe 6.

Selon les figures 2, 3 et 9 un deuxième bâti de guide mobile 7 est monté identiquement à l'autre coin du lit 1 et proche du second guide fixe 6 avec toutefois une seule différence, le rouleau principal cylindrique 15 est remplacé par un rouleau principal à gorge 18. Le rouleau principal à gorge 18 assure le maintien longitudinal et transversal du lit 1.

D'autres variétés de guides mobiles 7 existent.

Les figures 4 et 5 montrent un bâti de guide mobile 7 muni d'un élément coulissant à ressort 20 dont le prolongement comporte un rouleau 16 maintenu en pression par un ressort de poussée incorporé dans l'élément coulissant à ressort 20 , un rouleau principal cylindrique15 assure le maintien du lit 1.

La figure 6 montre un bâti de guide mobile 7 avec seulement la présence du rouleau principal cylindrique 15 d'une part à une extrémité de l'arbre d'entraînement 10 et la présence d'un rouleau principal à gorge 26 d'autre part à l'autre extrémité de l'arbre d'entraînement 10, les deux rouleaux 16 sont supprimés dans cette application. Le poids du lit 1 maintien une pression constante contre le guide fixe 6 par l'intermédiaire du rouleau principal 15 et par effet balancier à l'aide des sangles 8 et 9 et des poulies de passage 13 et a condition que le véhicule 2 soit stationné à l'horizontale ou avec très peu de devers. Pour assurer le maintien transversal du lit 1 lorsque le véhicule de camping 2 est en mouvement une surface d'appui à ressort de pression 25 est prévu en haut du flanc 5 et destinée à entrer en contact avec le rouleau principal cylindrique 15 et une deuxième surface d'appui a ressort de pression 25 est destinée à entrer en contact avec le rouleau principal à gorge 18.

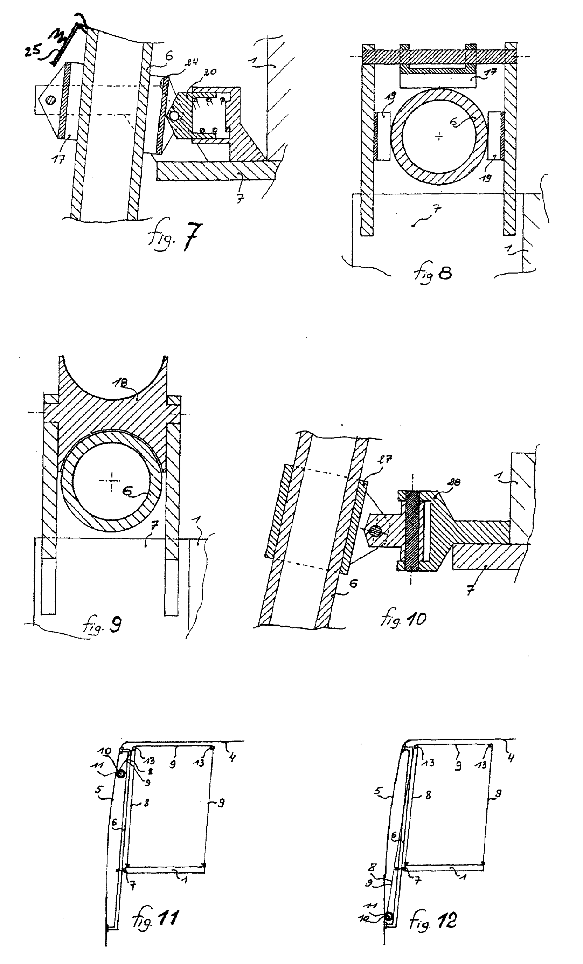

La figure 7 montre un dispositif de guide glissant au lieu d'un dispositif de guide roulant.Le bâti de guide mobile 7 comporte à son extrémité un frotteur principal articulé 17 sur lequel est collé un feutre qui vient en contact contre le guide fixe 6 et lorsque le lit 1 se déplace le feutre glisse le long du guide fixe 6 et assure le maintien du lit 1 dans le sens transversal.La figure montre également une surface d'appui à ressort de pression 25 ainsi qu'un frotteur de pression 24.

La figure 8 montre un bâti de guide mobile glissant 7 avec un frotteur principal articulé17 et son feutre ainsi que deux frotteurs 19 avec feutres situés de part et d'autre du guide fixe 6 et fixés sur le bâti de guide mobile 7 .Les deux frotteurs19 sont parallèles au guide fixe 6 et perpendiculaires au flanc 5 et maintiennent le lit 1 dans le sens longitudinal.Les frotteurs 19 ne sont présents que sur un des deux bâtis de guide mobile 7.

La figure 9 montre un rouleau principal à gorge 18 en contact avec un guide fixe 6 monté sur un bâti de guide mobile 7 et destiné au maintien longitudinal et transversal du lit 1.Le rouleau principal à gorge 18 n'est présent que sur un des deux bâtis de guide mobile 7, l'autre bâti de guide mobile 7 comporte un rouleau principal cylindrique 15 pour assurer le maintien transversal du lit 1.

La figure 10 montre un bâti de guide mobile 7 et l'utilisation d'un tube de guidage alésé 27 avec articulation horizontale et articulation verticale et se rapportant à un des deux guides fixes 6, en rapport avec le deuxième guide fixe l'articulation verticale est supprimée.

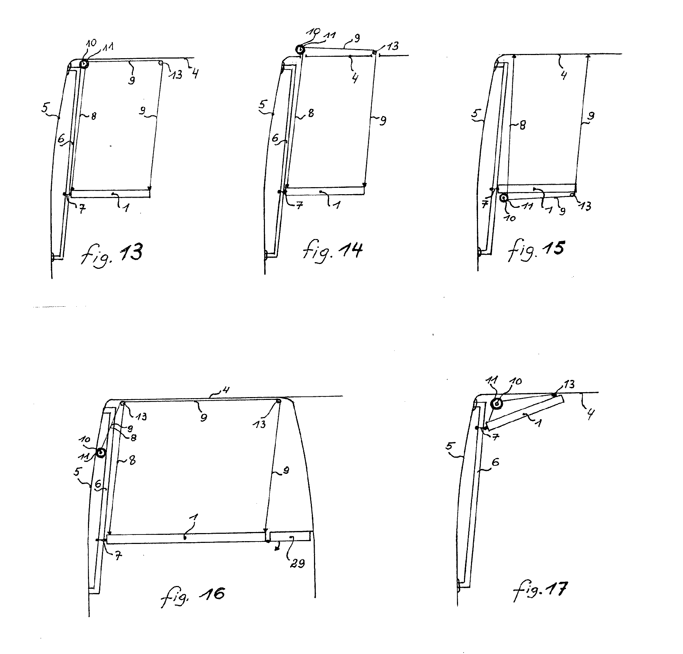

Les figures 11,12,13 ,14 et 15 montrent des schémas simplifiés des différentes dispositions de l'arbre d'entraînement 10 et du moteur avec réducteur 11, le lit 1 étant représenté en position basse et de nuit. En figure 10 l'arbre d'entraînement 10 est situé en haut et juste sous le renfort de caisse supérieur. En figure 11 l'arbre d'entraînement 10 est situé en bas du flanc 5 et plus bas que le lit1.En figure 12 l'arbre d'entraînement 10 est situé contre le plafond et contre le renfort de caisse,cette disposition permet de supprimer les poulies de passage 13 à cet emplacement.En figure 13 l'arbre d'entraînement 10 est situé à l'extérieur du véhicule de camping 2 au dessus du toit ainsi que les poulies de passage 13, des fentes dans le toit permettent le passage des sangles 8 et 9.En figure 14 l'arbre d'entraînement 10 et le moteur avec réducteur 11 sont fixés solidairement sous le lit1, les poulies de passage 13 sont également montées sous le lit1 et les sangles 8 et 9 sont fixées au plafond 4.

La figure 16 montre un schéma simplifié d'un lit articulé 1 transversal avec la partie additionnelle 23.

La figure 17 montre un lit 1 en position haute inclinée sous le plafond 4.

Ceci termine la description de la présente invention.

## Revendications

1. Mécanisme d'entraînement et de guidage pour lit escamotable **caractérisé en ce qu'**il comporte :
un arbre d'entraînement (10) dont l'axe est parallèle au plancher d'un véhicule de camping (2) et parallèle au flanc (5) du dit véhicule de camping (2) et maintenu fixé solidement au flanc (5) par l'emploi de deux paliers (14) dans les quels tourillonne l'arbre d'entraînement (10), les deux paliers (14) étant situés de part et d'autre aux extrémités du dit arbre d'entraînement (10) lequel comporte à une de ses extrémités deux poulies d'entraînement jumelées (12) solidaires du dit arbre d'entraînement (10) et que deux autres poulies d'entraînement jumelées (12) solidaires de l'arbre d'entraînement (10) sont situées à l'autre extrémité du dit arbre d'entraînement (10) ;
un moteur avec réducteur (11) alimenté en courant continu avec la capacité de tourner dans les deux sens et fixé au flanc (5) du véhicule de camping (2) et dont l'axe de sortie est en prolongement de l'arbre d'entraînement (10) et accouplé à l'arbre d'entraînement (10) ;
un guide fixe (6) fixé d'une part en haut du flanc (5) et fixé d'autre part vers le bas du flanc (5) et situé sensiblement vers une des extrémités de l'arbre d'entraînement (10) et dirigé verticalement par rapport au plancher (3) dans le sens transversal du véhicule de camping (2) et dirigé dans le sens transversal en suivant l'inclinaison du flanc (5) et de manière à laisser passer l'arbre d'entraînement entre le flanc (5) et le dit guide (6) et qu'un deuxième guide fixe (6) identique est situé identiquement et sensiblement vers l'autre extrémité de l'arbre d'entraînement (10) ;
deux poulies de passage (13) jumelées et fixées sous le plafond (4) à proximité d'un des deux guides fixes (6) et dont l'axe commun est parallèle à l'arbre d'entraînement (10) et deux autres poulies de passage (13) jumelées identiques et fixées sous le plafond (4) à proximité de l'autre guide fixe (6) et dont l'axe commun est parallèle à l'arbre d'entraînement (10) ;
deux sangles (8) fixées l'une à une des deux poulies d'entraînement jumelées (12) situées à une des extrémités de l'arbre d'entraînement (10) se dirigeant vers le haut en s'enroulant partiellement autour et par dessus de la poulie de passage (13) proche du guide fixe (6) correspondant sous le plafond (4) et se dirigeant ensuite vers le bas pour venir se fixer à un coin correspondant d'un lit (1) faisant partie de l'équipement d'un véhicule de camping (2) et que la deuxième sangle (8) parcourt le même trajet en correspondance avec la poulie d'entraînement (12) située à l'autre extrémité de l'arbre d'entraînement (10) et de la poulie de passage (13) correspondante pour finalement venir se fixer à un autre coin correspondant du dit lit(1)
deux sangles (9) fixées l'une à une des deux poulies d'entraînement jumelées (12) situées à une des extrémités de l'arbre d'entraînement (10) se dirigeant vers le haut et s'enroulant partiellement autour et par dessus de la poulie de passage (13) proche du guide fixe (6) correspondant et se dirigeant ensuite sous le plafond (4) vers la poulie de passage (13) proche du centre du plafond (4) en s'enroulant partiellement autour de la dite poulie de passage (13) et ensuite se dirigeant vers le bas pour venir se fixer à un coin correspondant d'un lit (1) et que la deuxième sangle (9) parcourt le même trajet en correspondance avec la poulie d'entraînement (12) située à l'autre extrémité de l'arbre d'entraînement (10) et des deux poulies de passage (13) correspondantes pour finalement venir se fixer à un autre coin du dit lit (1) ;
deux bâtis de guides mobiles (7) fixés chacun aux coins du lit (1) proches du flanc (5) sur lesquels viennent se fixer les deux sangles (8) et que les deux sangles (9) se fixent aux deux coins du lit (1) proches du centre du véhicule de camping (2) ;
un rouleau principal cylindrique (15) dont l'axe est parallèle à l'arbre d'entraînement (10) et solidaire d'un bâti de guide mobile (7) correspondant avec une des extrémités de l'arbre d'entraînement (10) et de manière à être situé entre le guide fixe (6) et le flanc (5) et en contact transversal contre le dit guide fixe (6) ;
un rouleau principal à gorge (18) dont l'axe est parallèle à l'arbre d'entraînement (10) et solidaire d'un bâti de guide mobile (7) correspondant avec l'autre extrémité de l'arbre d'entraînement (10) et de manière à être situé entre le guide fixe (6) et le flanc (5) et en contact transversal et longitudinal contre le dit guide fixe (6) ;
deux leviers articulés (21) l'un et l'autre montés sur les deux bâtis de guides mobiles (7) et dont les axes sont parallèles à l'arbre d'entraînement (10) et comportant à leur extrémité un rouleau (16) dont l'axe est parallèle à l'arbre d'entraînement (10) et un ressort de traction reliant le levier articulé (21) au bâti de guide mobile (7) de manière à maintenir une pression constante du dit rouleau (16) contre le guide fixe (6).

2. Mécanisme d'entraînement et de guidage pour lit escamotable selon la revendication 1 **caractérisé en ce que** les deux leviers articulés (21) montés sur les deux bâtis de guides mobiles (7) et équipés de leurs rouleaux (16) sont remplacés par deux éléments coulissants à ressort (20) chacun équipé d'un rouleau ( 16) destiné au maintien d'une pression constante contre le guide fixe (6) correspondant, les deux éléments coulissants à ressort (20) étant dirigés parallèlement au plancher (3) et perpendiculairement à l'arbre d'entraînement (10) et vers le centre du guide fixe (6) correspondant.

3. Mécanisme d'entraînement et de guidage pour lit escamotable selon la revendication 1 **caractérisé en ce que** les deux bâtis de guide mobile (7) ne comportent que le rouleau principal cylindrique (15) pour l'un et le rouleau principal à gorge (18) pour l'autre, les leviers articulés (21) étant absents.

4. Mécanisme d'entraînement et de guidage pour lit escamotable selon les revendications 1 et 2 **caractérisé en ce que** le rouleau principal cylindrique (15) est remplacé par un frotteur principal articulé (17) composé d'un patin sur lequel est collé un feutre ou un matériau comparable et destiné à être en contact contre le guide fixe (6) et être situé entre le guide fixe(6) et le flanc (5) et que le rouleau principal à gorge (18) est remplacé par un dispositif de frotteur principal articulé (17) complété de deux frotteurs (19) solidaires et situés de chaque côté du guide fixe (6) correspondant et de manière à assurer le maintien longitudinal du lit (1).

5. Mécanisme d'entraînement et de guidage pour lit escamotable selon les revendications 1,2,3 et 4 **caractérisé en ce que** l'arbre d'entraînement (10) muni de sa paire de poulies d'entraînement jumelées (12) soit situé sous le plafond (4) et proche du renfort de caisse reliant le flanc (5) au plafond (4) et que le dit arbre d'entraînement (10) soit muni de ses deux paliers (14) fixés au plafond (4) et que le moteur avec réducteur (11) positionné dans le prolongement de l'arbre d'entraînement (10) soit solidaire de celui-ci et fixé au toit et à l'extérieur du plafond (4).

6. Mécanisme d'entraînement et de guidage pour lit escamotable selon les revendications 1,2,3 et 4 **caractérisé en ce que** l'arbre d'entraînement (10) muni de sa paire de poulies d'entraînement jumelées (12) soit situé à l'extérieur du véhicule de camping (2) et au dessus du toit du dit véhicule de camping (2) et que le dit arbre d'entraînement (10) soit muni de ses deux paliers (14) fixés à l'extérieur du plafond (4) et que le moteur avec réducteur (11) positionné dans le prolongement de l'arbre d'entraînement (10) soit solidaire de celui-ci et fixé au toit et à l'extérieur du plafond (4).

7. Mécanisme d'entraînement et de guidage pour lit escamotable selon les revendications 1,2,3 et 4 **caractérisé en ce que** l'arbre d'entraînement (10) ainsi que le moteur avec réducteur (11) soient situés sous le lit (1) et proche du flanc (5) et qu'ils soient solidaires du dit lit (1) et que deux poulies de passage (13) soient également fixées sous le lit (1) et proches du centre du véhicule de camping (2) et que les deux sangles (8) soient fixées sous le plafond (4) et proches du flanc (5) et que les deux sangles (9) soient fixées sous le plafond (4) et vers le centre du dit plafond (4).

8. Mécanisme d'entraînement et de guidage pour lit escamotable selon les revendications 1,2,3,4,5,6 et 7 **caractérisé en ce que** le lit (1) soit rangé sous le plafond (4) et incliné par rapport au plancher (3) dans le sens transversal et que les poulies d'entraînement jumelées (12) ont des diamètres différents l'une par rapport à l'autre et de manière à ce que les deux sangles (9) correspondent aux poulies d'entraînement jumelées (12) ayant le plus grand diamètre et que les deux sangles (8) correspondent aux poulies d'entraînement (12) ayant le plus petit diamètre.

9. Mécanisme d'entraînement et de guidage pour lit escamotable selon les revendications 1,2,3,4,5,6,7 et 8 **caractérisé en ce que** l'axe du moteur avec réducteur (11) soit perpendiculaire à l'axe d'entraînement (10) et que la liaison mécanique entre le dit moteur avec réducteur (11) avec l'axe d'entraînement (10) se fasse au moyen d'engrenages coniques ou au moyen d'engrenages à vis sans fin ou au moyen d'engrenages hélicoïdaux.

10. Mécanisme d'entraînement et de guidage pour lit escamotable selon les revendications 1,2,3,4,5,6,7,8 et 9 **caractérisé en ce que** les sangles (8) et (9) soient remplacées par des chaînes ou des cordages ou des câbles métalliques souples ou tout autre moyen de substitution.

11. Mécanisme d'entraînement et de guidage pour lit escamotable selon les revendications 1,2,3,4,5,6,7,8,9 et 10 **caractérisé en ce que** les deux guides fixes (6) qui suivent généralement l'inclinaison du flanc (5) suivent une inclinaison plus prononcée et avec un écartement du flanc (5) plus important en haut par rapport à l'écartement du bas.

12. Mécanisme d'entraînement et de guidage pour lit escamotable selon les revendications 1,2,3,4,5,6,7,8,9,10 et 11 **caractérisé en ce que** les deux guides fixes (6) présentent un profil transversal courbé ou coudé ou une combinaison avec une partie droite, une partie courbée et une partie coudée.

13. Mécanisme d'entraînement et de guidage pour lit escamotable selon les revendications 1,3, 4,5,6,7,8,9,10,11 et 12 **caractérisé en ce que** les bâtis de guide mobile (7) comportent chacun un frotteur de pression (24) maintenu en pression contre le guide fixe (6) à l'aide d'un levier articulé (21) ou à l'aide d'un élément coulissant a ressort (20).

14. Mécanisme d'entraînement et de guidage pour lit escamotable selon les revendications 1,3,4,5,6,7,8,9,10,11,12 et 13 **caractérisé en ce qu'**une surface d'appui a ressort de pression (25) soit située en haut et entre le flanc (5) et un des deux guides fixes (6) et destinée à entrer en contact avec le rouleau principal cylindrique (15) ou avec le frotteur principal articulé (17) en fin de course vers le haut et pour assurer le maintien transversal du lit (1) et qu'une deuxième surface d'appui a ressort de pression (25) soit relative au deuxième guide fixe (6) pour assurer semblablement le maintien transversal du lit (1) à l'aide du rouleau principal à gorge (18) ou à l'aide du frotteur principal articulé (17) muni de ses deux frotteurs (19).

15. Mécanisme d'entraînement et de guidage pour lit escamotable selon les revendications 1, 5,6,7,8,9,10et 11 **caractérisé en ce que** le bâti de guide mobile(7) comporte une pièce de liaison (28) avec une articulation verticale par rapport au plancher (3) et une deuxième articulation horizontale et parallèle à l'arbre d'entraînement (10) et qu'autour de cette articulation soit fixé un tube de guidage alésé (27) pouvant coulisser autour du guide fixe (6) correspondant et qu'en correspondance avec le deuxième guide fixe (6) le bâti de guide mobile (7) comporte une pièce de liaison (28) ne comportant que l'articulation horizontale et parallèle à l'arbre d'entraînement (10) et un tube de guidage alésé (27) et que les deux guides fixes (6) doivent être rigoureusement droits et rectifiés.
